# EUROPÄISCHE PATENTANMELDUNG

(11) **EP 1 207 381 A1**
(43) Veröffentlichungstag der Anmeldung: **22.05.2002**
(21) Anmeldenummer: 01124784.8
(22) Anmeldetag: 17.10.2001
(51) Int. Cl.: G01M 17/007, G01D 11/30

(54) **Vorrichtung zum Messen von Daten auf einem Motorfahrzeug im Fahrversuch**

(30) Priorität: 24.10.2000 DE 20018212 U
(71) Anmelder: Cartec GmbH, 84579 Unterneukirchen (DE)
(72) Erfinder: Langlechner, Richard, 84579 Unterneukirchen (DE)
(74) Vertreter: Schieschke, Klaus, Dipl.-Ing.

(57) **Zusammenfassung**

Die Erfindung betrifft eine Vorrichtung zum Messen von Daten auf einem im Fahrversuch befindlichen Fahrzeug, wobei die Vorrichtung auf einfache Weise am Fahrzeug befestigt bzw. von diesem gelöst werden kann und das an der Vorrichtung angeordnete Meßgerät frei gegenüber der Vorrichtung ausgerichtet und fixiert werden kann.

## Beschreibung

Die Erfindung bezieht sich auf eine Vorrichtung zum Messen von Daten auf einem Motorfahrzeug im Fahrversuch, insbesondere Verzögerungsmessgerät für ein motorisiertes Zweirad, mit einer Befestigungsvorrichtung zur Anbringung des Messgerätes auf dem Fahrzeug.

Als allgemeiner Stand der Technik ist es bereits bekannt, ein derartiges Verzögerungsmessgerät über eine Platte auf drei Stützen anzuordnen. Bisher war jedoch nicht das Problem gelöst, dieses Messgerät ohne großen technischen Aufwand auf einem Motorfahrzeug anzuordnen, welches sich im Fahrversuch befindet.

Entsprechend liegt der vorliegenden Erfindung die Aufgabe zugrunde, eine Vorrichtung der eingangs genannten Art zu schaffen, welche auf einfache Weise auf einem Motorfahrzeug anzuordnen ist, welches sich im Fahrversuch befindet.

Diese Aufgabe wird erfindungsgemäß dadurch gelöst, dass die Befestigungsvorrichtung in Form eines Winkelhebels ausgebildet ist, dessen einer Schenkel ein mit dem Fahrzeug verbindbares, erstes Halteelement und dessen anderer Schenkel ein mit dem Messgerät verbundenes, in mehreren Ebenen schwenkbares, zweites Halteelement aufweist. Durch den Einsatz dieser beiden Halteelemente ist es möglich, eine an sich bekannte Vorrichtung zum Messen von Daten auf einem Motorfahrzeug im Fahrversuch einzusetzen, wobei Aufbau und Handhabung der erfindungsgemäßen Vorrichtung einfach gestaltet sind.

Nach einem weiteren Merkmal der Erfindung können der erste Schenkel der Befestigungsvorrichtung als Platte und der zweite Schenkel als Haltezapfen ausgebildet sein. Weiterhin kann das erste Halteelement als an sich bekannter Saughalter und das zweite Halteelement als an sich bekanntes Kugelgelenk ausgebildet sein.

Nach einem anderen Merkmal der Erfindung kann in der Grundplatte ein Justierelement gelagert sein, welches beispielsweise als Libelle ausgebildet ist.

Vorteilhafte Weiterbildungen ergeben sich aus den Unteransprüchen.

Die Erfindung wird nachfolgend anhand eines in der Zeichnung dargestellten Ausführungsbeispiels näher beschrieben. In der Zeichnung zeigen:
- Fig. 1: eine schematische Seitenansicht der erfindungsgemäßen Vorrichtung bei Anbringung auf einer waagrechten Fläche eines Fahrzeuges,
- Fig. 2: die Vorrichtung nach Fig. 1 bei Anbringung auf einer senkrechten Fläche eines Fahrzeuges.

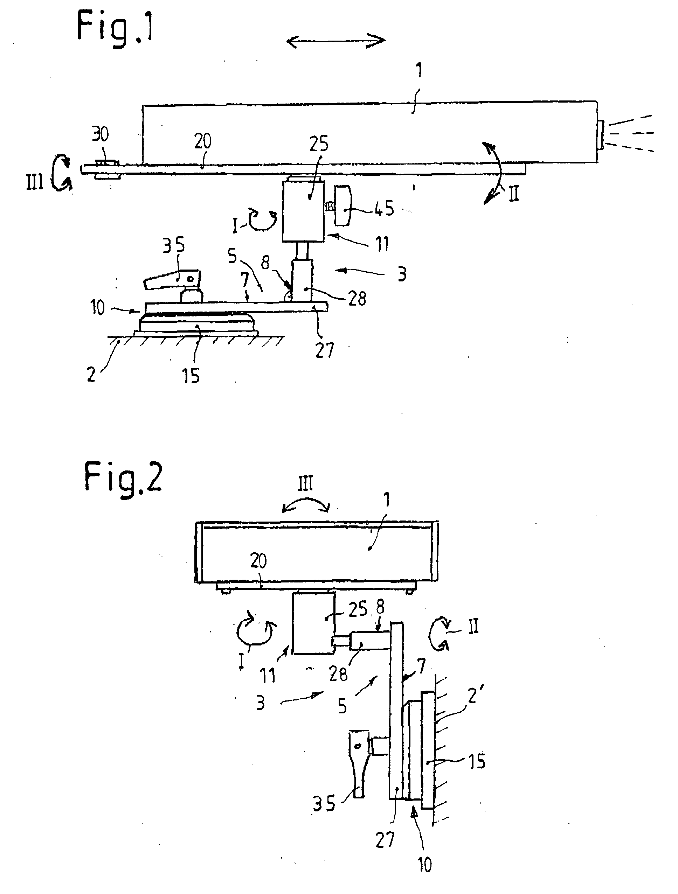

In den Fig. 1 und 2 ist eine Vorrichtung zum Messen von Daten auf einem Motorfahrzeug im Fahrversuch dargestellt. Insbesondere handelt es sich um ein Verzögerungsmessgerät 1 für ein motorisiertes Zweirad. Es sind jedoch auch andere Anwendungen denkbar, beispielsweise tiefergelegte Fahrzeuge, wobei sich die Messung auch nicht auf die Verzögerung beschränken muss.

Das Messgerät 1 ist über eine Befestigungsvorrichtung 3 an einem schematisch dargestellten Fahrzeug 2 bzw. 2' befestigt. Diese Befestigungsvorrichtung 3 ist in der Form eines Winkelhebels 5 ausgebildet. Ein erster Schenkel 7 dieses Winkelhebels 5 weist ein mit dem Fahrzeug 2 bzw. 2' verbindbares erstes Halteelement 10 und ein anderer Schenkel 8 ein mit dem Messgerät 1 verbundenes, in mehreren Ebenen I, II, III schwenkbares, zweites Halteelement 11 auf.

Der erste Schenkel 7 der Befestigungsvorrichtung 3 ist als Platte 27 ausgebildet. Der zweite Schenkel 8 weist beispielsweise die Form eines Haltezapfens 28 auf.

In einem bevorzugten Ausführungsbeispiel sind der erste und der zweite Schenkel 7 bzw. 8 der Befestigungsvorrichtung 3 rechtwinklig zueinander angeordnet.

Das erste Saugelement 10 kann als an sich bekannter Saughalter 15 ausgebildet sein. Das zweite Halteelement 11 kann in Form eines an sich bekannten Kugelgelenks 25 gestaltet sein.

Wie aus den Fig. 1 und 2 hervorgeht, ist das Messgerät 1 auf einer Grundplatte 20 befestigt, an welcher sich unterseitig das zweite Halteelement 11 befindet, welches als Kugelgelenk 25 ausgebildet und an dem Haltezapfen 28 befestigt ist.

Gemäß Fig. 1 ist in der Grundplatte 20 ein Justierelement 30 gelagert, welches beispielsweise eine "Libelle" sein kann. Dieses Justierelement 30, d. h. die "Libelle", befindet sich nach Fig. 1 hinter dem Messgerät 1.

Aus Fig. 1 und 2 geht hervor, dass auf der als erster Schenkel 7 ausgebildeten Platte 27 in einem Endbereich der Saughalter 15 und in dem anderen Endbereich der Haltezapfen 28 angeordnet sind, welcher endseitig in das in allen denkbaren Ebenen verschwenkbare Kugelgelenk 25 übergeht.

Die gesamte Einheit, bestehend aus dem Verzögerungsmessgerät 1 und der Befestigungsvorrichtung 3 wird nach Fig. 1 auf die Oberfläche eines Fahrzeugs 2 aufgebracht, wonach nach Herumlegen eines Hebels 35 der Saughalter 15 fest mit dem Fahrzeug 2 verbunden wird. Nunmehr lässt sich nach Lösen einer Arretierschraube 45 das Kugelgelenk 25 frei bewegen, so dass damit das Verzögerungsmessgerät 1 unter Inanspruchnahme des Justierelements 30 in den Ebenen I bzw. II bzw. III so justiert wird, dass sich die gewünschte Position für das Verzögerungsmessgerät 1 ergibt. Anschließend wird die Arretierschraube 45 wieder so verstellt, dass die Endposition dreh- und verschiebesicher vorliegt.

Während bei dem Ausführungsbeispiel nach Fig. 1 das Fahrzeug 2 eine waagerechte Fläche aufweist, besteht nach Fig. 2 die Möglichkeit, dass das Fahrzeug 2' ein senkrechte Fläche besitzt, wobei trotzdem mit Hilfe der Befestigungsvorrichtung 3 das Verzögerungsmessgerät 1 funktionsrichtig in seine gewünschte Position gebraucht werden kann. Nach Fig. 2 ist das Kugelgelenk 25 um 90° gegenüber der Position nach Fig. 1 verstellt, so dass in diesem Anwendungsfall das Messgerät 1 eine z. B. waagerechte Lage einnimmt.

Zwischen den beiden Lagen eines Fahrzeugs 2 bzw. 2', d. h zwischen horizontaler und vertikaler Ebene können alle denkbaren Ebenen vorhanden sein, wobei trotzdem die Möglichkeit besteht, dass über die Befestigungsvorrichtung 3 mit dem Saughalter 15 und dem Kugelgelenk 25 die gewünschte Einsatzposition für das Verzögerungsmessgerät 1 an einem Motorfahrzeug, welches sich im Fahrversuch befindet, erzielt werden kann. Die gesamte Vorrichtung ist einfach aufgebaut und leicht zu bedienen.

## Patentansprüche

1. Vorrichtung zum Messen von Daten auf einem Motorfahrzeug im Fahrversuch, insbesondere Verzögerungsmessgeräte (1) für ein motorisiertes Zweirad, mit einer Befestigungsvorrichtung (3) zur Anbringung des Messgerätes (1) auf dem Fahrzeug (2; 2'),
**dadurch gekennzeichnet,**
**dass** die Befestigungsvorrichtung (3) in Form eines Winkelhebels (5) ausgebildet ist, dessen einer Schenkel (7) ein mit dem Fahrzeug (2, 2') verbindbares, erstes Halteelement (10) und dessen anderer Schenkel (8) ein mit dem Messgerät (1) verbundenes, in mehreren Ebenen (I, II, III) schwenkbares, zweites Halteelement (11) aufweist.

2. Vorrichtung nach Anspruch 1, **dadurch gekennzeichnet, dass** der erste Schenkel (7) der Befestigungsvorrichtung (3) als Platte (27) und der zweite Schenkel (8) als Haltezapfen (28) ausgebildet sind.

3. Vorrichtung nach Anspruch 1 und 2, **dadurch gekennzeichnet, dass** das erste Halteelement (10) als an sich bekannter, unterhalb der Platte (27) befestigter Saughalter (15) ausgebildet ist.

4. Vorrichtung nach Anspruch 1 oder 2, **dadurch gekennzeichnet, dass** das Messgerät (1) auf einer Grundplatte (20) befestigt ist, an welcher sich unterseitig das zweite Halteelement (11) befindet.

5. Vorrichtung nach Anspruch 4, **dadurch gekennzeichnet, dass** das zweite Halteelement (11) als an sich bekanntes, an dem Haltezapfen (28) befestigtes Kugelgelenk (25) ausgebildet ist.

6. Vorrichtung nach Anspruch 4, **dadurch gekennzeichnet, dass** in der Grundplatte (20) ein Justierelement (30) gelagert ist.

7. Vorrichtung nach Anspruch 6, **dadurch gekennzeichnet, dass** das Justierelement (30) als an sich bekannte "Libelle" ausgebildet ist.

8. Vorrichtung nach den Ansprüchen 6 oder 7, **dadurch gekennzeichnet, dass** das Justierelement (30) hinter dem Messgerät (1) angeordnet ist.

9. Vorrichtung nach einem oder mehreren der vorhergehenden Ansprüche, **dadurch gekennzeichnet, dass** der erste und der zweite Schenkel (7, 8) der Befestigungsvorrichtung (3) rechtwinklig zueinander angeordnet sind.

10. Vorrichtung nach einem oder mehreren der vorhergehenden Ansprüche, **dadurch gekennzeichnet, dass** auf der als erster Schenkel (7) ausgebildeten Platte (27) in einem Endbereich der Saughalter (15) und in einem anderen Endbereich der Haltezapfen (28) angeordnet sind.
